# EUROPEAN PATENT APPLICATION

(11) **EP 4 734 258 A1**
(43) Date of publication of application: **29.04.2026**
(21) Application number: 24825520.0
(22) Date of filing: 12.03.2024
(51) Int. Cl.: H01M 50/342

(54) **BATTERY**

(30) Priority: 23.06.2023 JP 2023103438
(71) Applicant: Vehicle Energy Japan Inc., Hitachinaka-shi, Ibaraki 312-8505 (JP)
(72) Inventor: ICHIKAWA Tomoyuki, Hitachinaka-shi, Ibaraki 312-8505 (JP); SUZUKI Takayuki, Hitachinaka-shi, Ibaraki 312-8505 (JP); WATABE Koichi, Hitachinaka-shi, Ibaraki 312-8505 (JP)
(74) Representative: MERH-IP Matias Erny Reichl Hoffmann Patentanwälte PartG mbB
(86) International application number: PCT/JP2024/009653
(87) International publication number: WO 2024/262109

(57) **Abstract**

Provided is a battery including a gas discharge mechanism capable of enhancing the gas discharge capability without increasing the frame of the gas discharge mechanism.

In a battery including a gas discharge mechanism that discharges a gas in a battery container when a gas pressure in the battery container reaches a predetermined value, the gas discharge mechanism includes a first gas discharge passage 51 connected to an inner portion side of the battery container, a second gas discharge passage 52 connected to the first gas discharge passage and connected to an outer portion side of the battery container, and a gas discharge valve that is provided in a part of a gas discharge passage composed of the first gas discharge passage and the second gas discharge passage and performs an opening action so that the inner portion side and the outer portion side of the battery container are connected to each other in the gas discharge passage when a gas pressure in the inner portion side of the battery container reaches a predetermined value, and furthermore, a cross-sectional shape of the second gas discharge passage 52 seen in an outflow direction of the gas when a gas discharge valve 54 has been opened is formed in a shape that does not hinder the flow of a streamline of the gas that flows out of the first gas discharge passage 51.

## Description

### Technical Field

The present invention relates to a battery.

### Background Art

In recent years, as a power source for electric vehicles, hybrid vehicles, and the like, development of a lithium-ion secondary battery having a high energy density has been underway. This lithium-ion secondary battery includes, for example, a wound electrode body and a battery can that accommodates this wound electrode body. The battery can includes an exterior body that is a box-type container having one opening portion on one surface and a battery lid that blocks the opening portion of this exterior body. Furthermore, in this kind of lithium-ion secondary battery, a gas discharge mechanism is provided in the battery lid to improve the safety.

This gas discharge mechanism is a battery part including a discharge valve designed to be opened at a predetermined pressure in a case where a gas is generated in the battery can to discharge the gas in the battery can. For example, a lithium-ion secondary battery described in Japanese Patent Application Publication No. 2012-252809 (Patent Literature 1) has a lid member (battery lid) in which a base portion that forms an upper surface, a peripheral wall portion that forms a recess portion that sinks from the base portion, and a split-type gas discharge valve (safety valve) that is articulated with and supported by the inner peripheral surface of the peripheral wall portion are integrally formed.

In this Patent Literature 1, an aluminum flat plate is pressed to form the recess portion, and a thin film-like gas discharge valve is integrally formed on a bottom portion of this recess portion. In addition, when the pressure of a gas reaches a predetermined value, a thin film that forms the gas discharge valve is split, and the pressure of the gas is released to the outside, whereby safety is secured.

### Citation List

### Patent Literature

Patent Literature 1: Japanese Patent Application Publication No. 2012-252809

### Summary of Invention

### Technical Problem

As described above, in batteries that are used in lithium-ion secondary batteries, a gas discharge mechanism is disposed to enhance the safety by releasing the pressure of a gas even in a case where an electrolyte or an active material therein is decomposed, the gas is generated, and the internal pressure increases.

Incidentally, this kind of lithium-ion secondary battery is used in mobile or stationary battery-powered equipment. For example, in the case of a battery for a battery electric vehicle (BEV), the battery capacity per cell is large, accordingly, the cell size becomes large, and the number of components (an electrode group, an electrolyte, an active material, and the like) per cell also increases. Therefore, there is a need to enhance the gas discharge capability of the gas discharge mechanism so that even a case where the amount of a gas generated also increases due to the increase in the number of the components can also be coped with.

In order to enhance the gas discharge capability of the gas discharge mechanism, an increase in the frame (size) of the gas discharge mechanism can also be considered. On the other hand, there is a request for the development of a lithium-ion secondary battery including a gas discharge mechanism capable of enhancing the gas discharge capability without increasing the frame of the gas discharge mechanism.

The present embodiment to be described below can also be applied to batteries other than lithium-ion secondary batteries. In addition, the present embodiment to be described below can also be applied to stationary battery-powered equipment that is not for vehicles (for example, energy storage equipment for domestic use or business use).

An object of the present invention is to provide a battery including a gas discharge mechanism capable of enhancing the gas discharge capability.

### Solution to Problem

A feature of the present invention is a battery including an energy storage element, a battery container that accommodates the energy storage element, and a gas discharge mechanism that fluidly connects an inner portion side of the battery container and an outer portion side of the battery container and discharges a gas in an inner portion of the battery container when a gas pressure in the inner portion of the battery container reaches a predetermined value, in which the gas discharge mechanism includes a first gas discharge passage connected to the inner portion side of the battery container, a second gas discharge passage connected to the first gas discharge passage and connected to the outer portion side of the battery container, and a gas discharge valve that is provided in a part of a gas discharge passage on a second gas discharge passage side of an end of the first gas discharge passage inside the battery container or on a first gas discharge passage side of an end of the second gas discharge passage outside the battery container, performs an opening action so that the inner portion side and the outer portion side of the battery container are connected to each other in the gas discharge passage when the gas pressure in the inner portion of the battery container reaches the predetermined value, and is opened in a shape conforming to a passage cross-sectional shape of the gas discharge passage in the case of performing the opening action, and furthermore, a cross-sectional shape of the second gas discharge passage seen in an outflow direction of the gas when the gas discharge valve has been opened is formed in a shape that does not hinder the flow of a streamline of the gas that flows out of the first gas discharge passage.

### Advantageous Effects of Invention

According to the present invention, it is possible to provide a battery including a gas discharge mechanism capable of enhancing the gas discharge capability.

### Brief Description of Drawings

[Fig. 1]

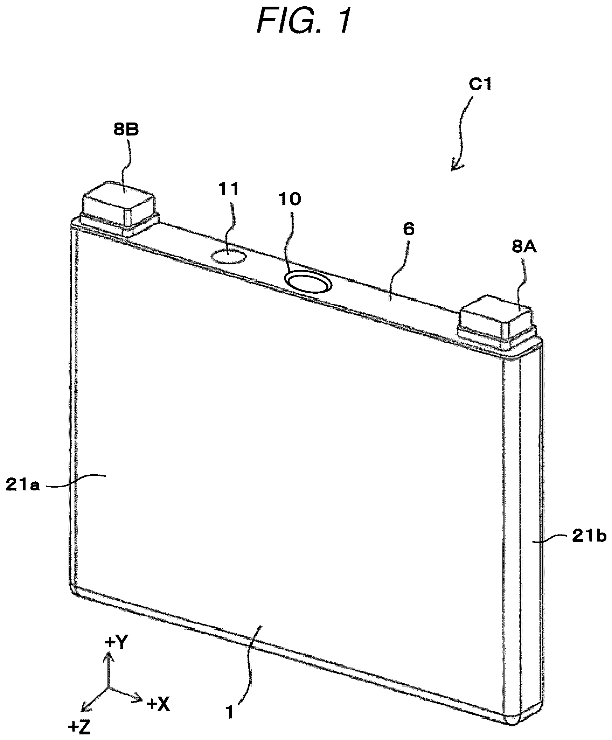

   Fig. 1 is an appearance perspective view showing the appearance of a lithium-ion secondary battery.
[Fig. 2]

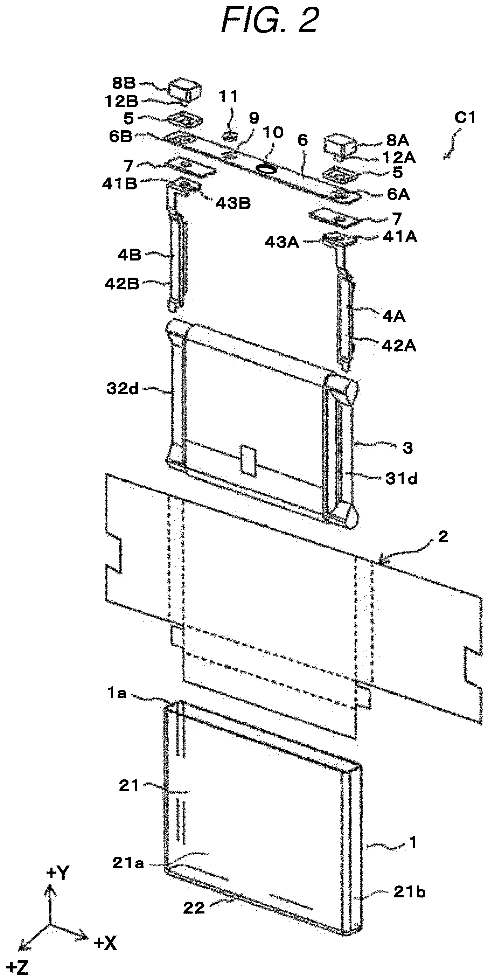

   Fig. 2 is a disassembled perspective view showing component parts by disassembling the lithium-ion secondary battery.
[Fig. 3]

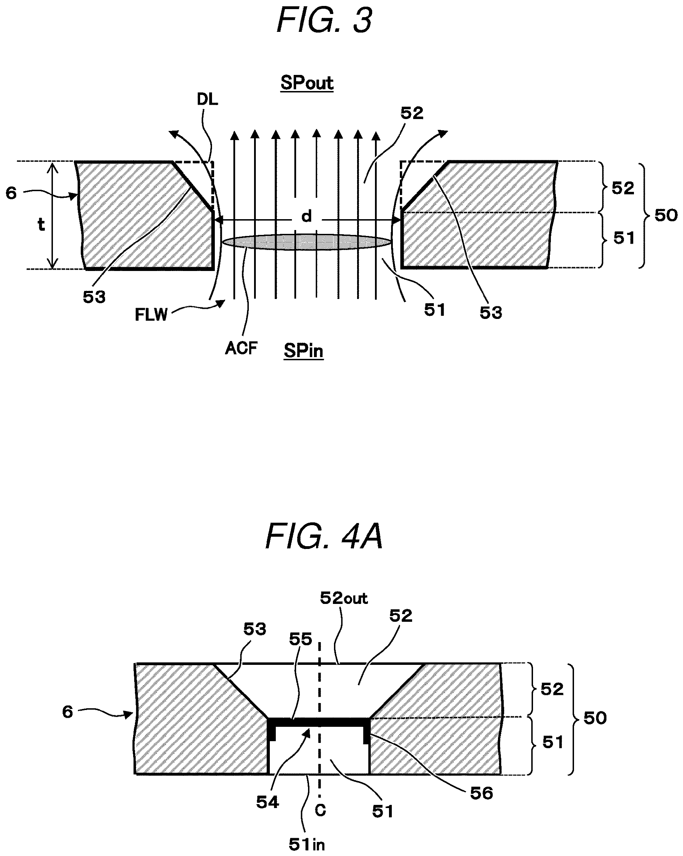

   Fig. 3 is a cross-sectional view showing a cross section of a gas discharge mechanism for describing a way of thinking of the present invention.
[Fig. 4A]
   Fig. 4A is a cross-sectional view showing the configuration of a gas discharge mechanism that becomes a first embodiment of the present invention.
[Fig. 4B]

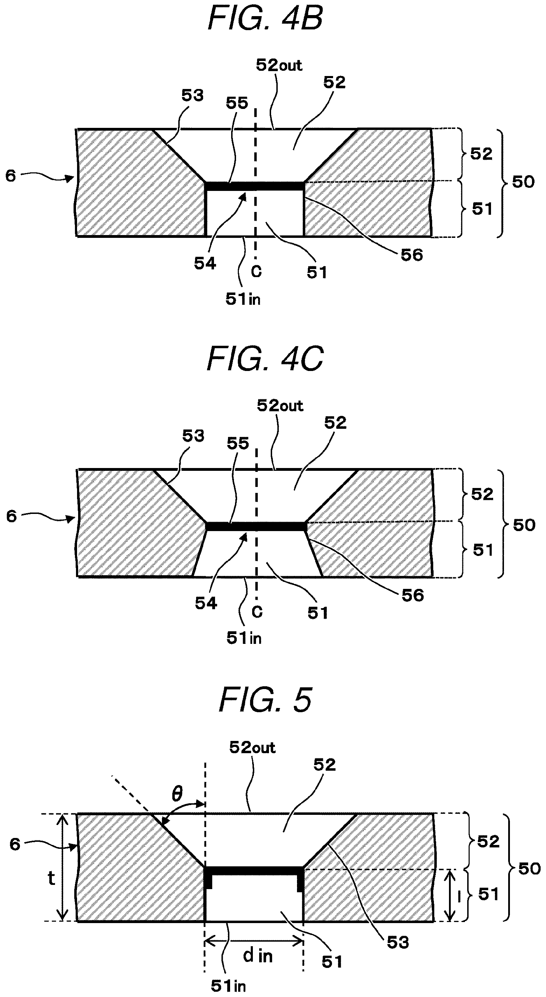

   Fig. 4B is a cross-sectional view showing the configuration of a gas discharge mechanism that becomes a first modification example of the first embodiment.
[Fig. 4C]
   Fig. 4C is a cross-sectional view showing the configuration of a gas discharge mechanism that becomes a second modification example of the first embodiment.
[Fig. 5]
   Fig. 5 is a cross-sectional view showing the kinds of parameters for performing a simulation of the gas discharge mechanism of Fig. 4.
[Fig. 6A]

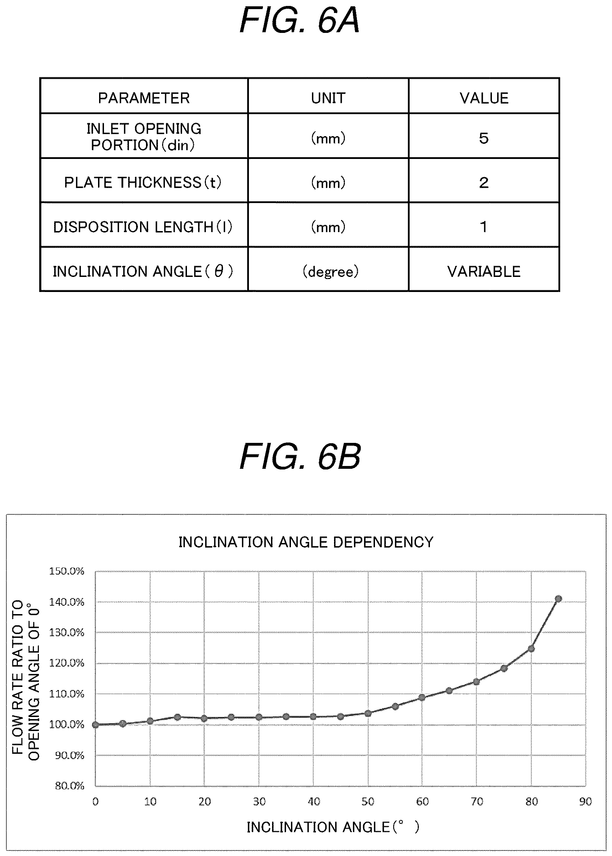

   Fig. 6A is an explanatory view showing the values of parameters at the time of executing a simulation of the gas discharge mechanism that becomes the first embodiment.
[Fig. 6B]
   Fig. 6B is an explanatory view showing the simulation results when the simulation of the gas discharge mechanism that becomes the first embodiment has been executed.
[Fig. 7A]

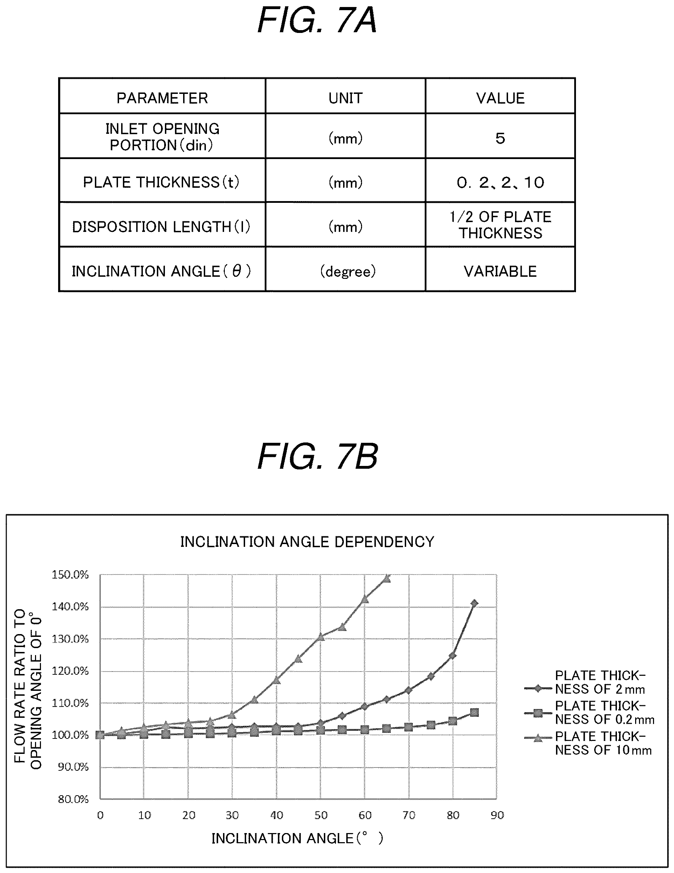

   Fig. 7A is an explanatory view showing the values of parameters at the time of executing a simulation of the gas discharge mechanism that becomes the first embodiment with changed plate thicknesses of a battery lid.
[Fig. 7B]
   Fig. 7B is an explanatory view showing the simulation results when the simulation of the gas discharge mechanism that becomes the first embodiment has been executed with the changed plate thicknesses of the battery lid.
[Fig. 8]

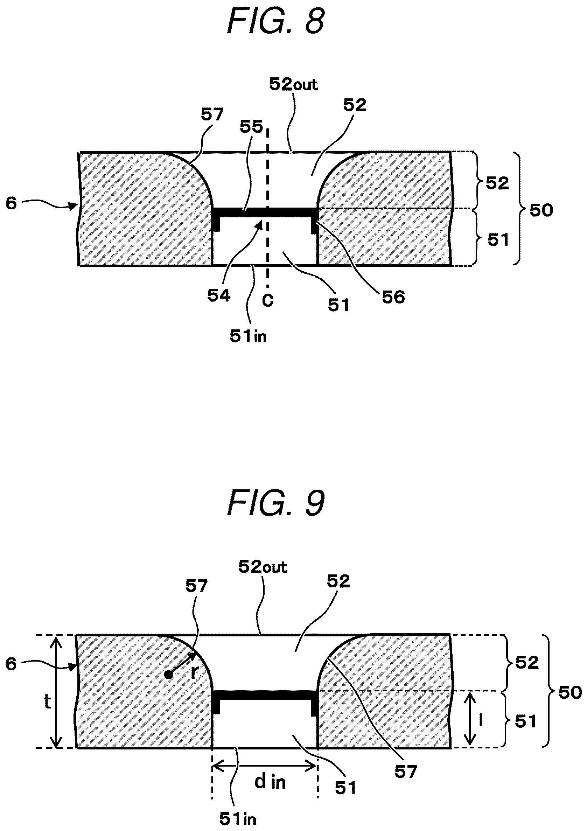

   Fig. 8 is a cross-sectional view showing the configuration of a gas discharge mechanism that becomes a second embodiment of the present invention.
[Fig. 9]
   Fig. 9 is a cross-sectional view showing the kinds of parameters for performing a simulation of the gas discharge mechanism of Fig. 8.
[Fig. 10A]

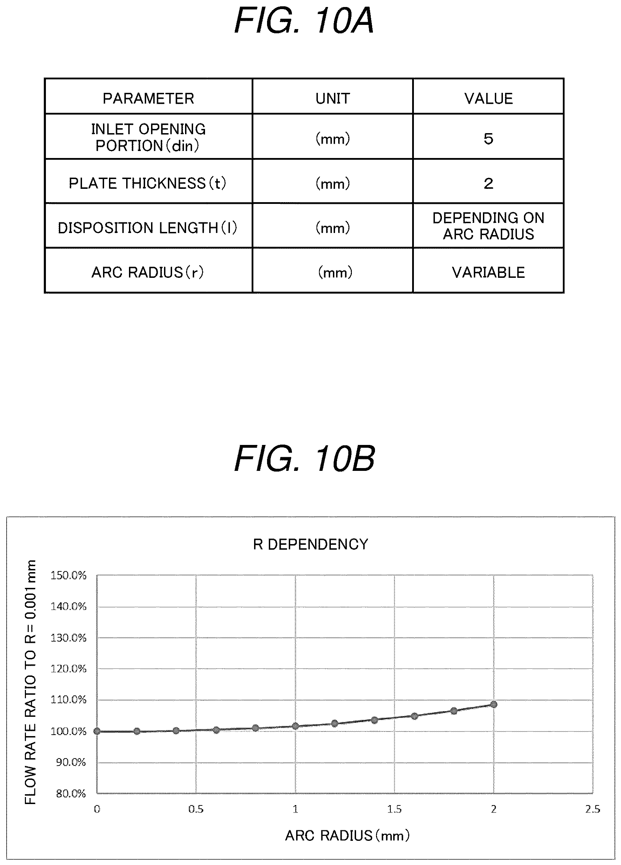

   Fig. 10A is an explanatory view showing the values of parameters at the time of executing a simulation of the gas discharge mechanism that becomes the second embodiment.
[Fig. 10B]
   Fig. 10B is an explanatory view showing the simulation results when the simulation of the gas discharge mechanism that becomes the second embodiment has been executed.
[Fig. 11]

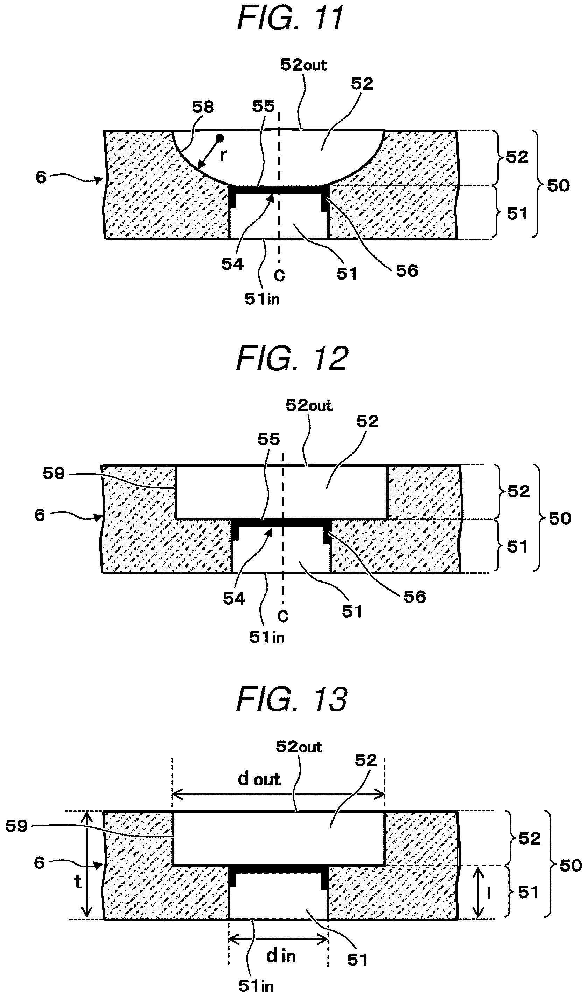

   Fig. 11 is a cross-sectional view showing the configuration of a gas discharge mechanism that becomes a third embodiment of the present invention.
[Fig. 12]
   Fig. 12 is a cross-sectional view showing the configuration of a gas discharge mechanism that becomes a fourth embodiment of the present invention.
[Fig. 13]
   Fig. 13 is a cross-sectional view showing the kinds of parameters for performing a simulation of the gas discharge mechanism of Fig. 12.
[Fig. 14A]

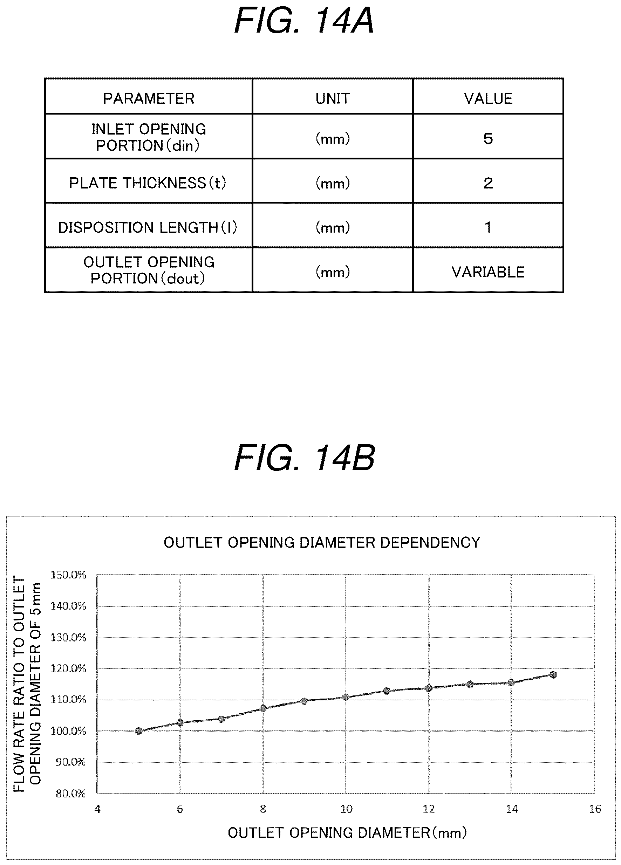

   Fig. 14A is an explanatory view showing the values of parameters at the time of executing a simulation of the gas discharge mechanism that becomes the fourth embodiment.
[Fig. 14B]
   Fig. 14B is an explanatory view showing the simulation results when the simulation of the gas discharge mechanism that becomes the fourth embodiment has been executed.
[Fig. 15]

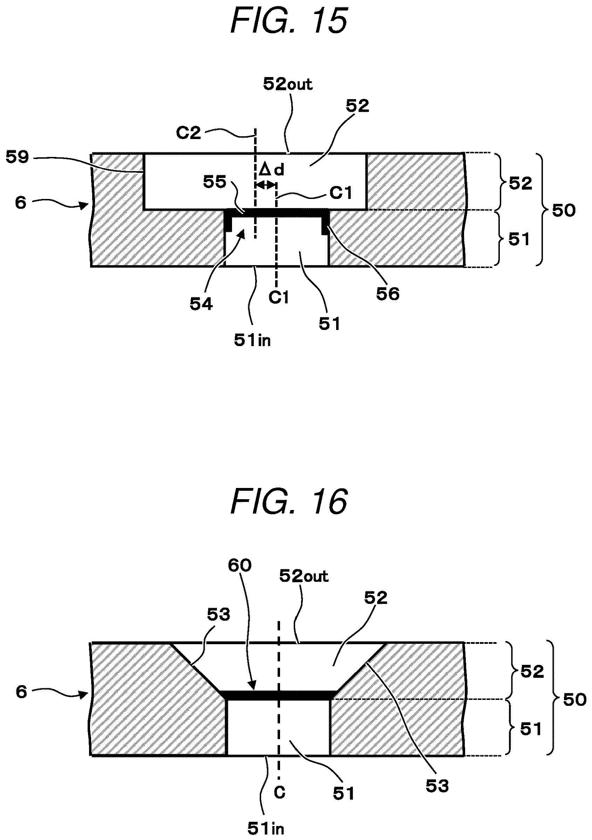

   Fig. 15 is a cross-sectional view showing the configuration of a gas discharge mechanism that becomes a fifth embodiment of the present invention.
[Fig. 16]
   Fig. 16 is a cross-sectional view showing the configuration of a gas discharge mechanism that becomes a sixth embodiment of the present invention.
[Fig. 17]

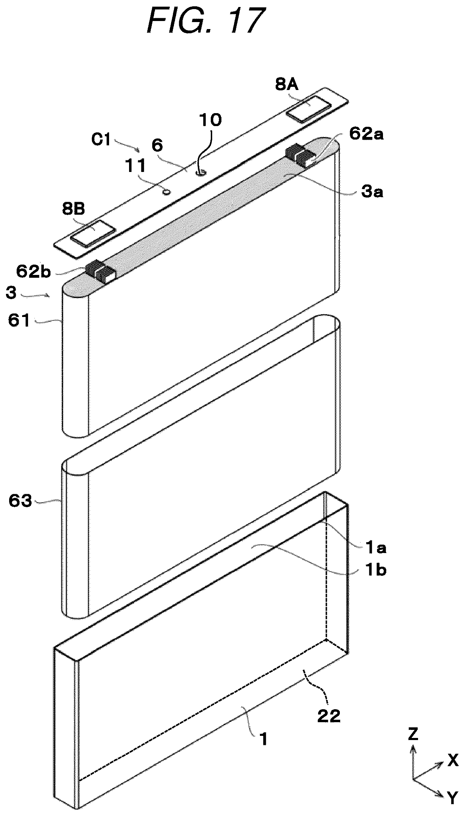

   Fig. 17 is an appearance perspective view seen from diagonally above of a disassembled battery including a configuration suitable for the present invention.

### Description of Embodiments

Hereinafter, embodiments of the present invention will be described in detail using drawings, but the present invention is not limited to the following embodiments and also includes a variety of modification examples or application examples within the technical concept of the present invention in the scope thereof.

### Example 1

An embodiment of the present invention will be described using drawings, and in the following embodiment, a case of a lithium-ion secondary battery that is used in hybrid vehicles or electric vehicles will be described as an example of a battery. Fig. 1 shows an appearance seen from diagonally above of an ordinary lithium-ion secondary battery to which the present embodiment is applied.

As shown in Fig. 1, a lithium-ion secondary battery C1 includes a battery can 1 and a lid member (hereinafter, referred to as a battery lid) 6. These are collectively defined as "battery container." In addition, in the battery can 1 having an opening portion, a wound electrode body 3 (refer to Fig. 2) as "energy storage element" that outputs stored electricity is accommodated, and an opening portion 1a (refer to Fig. 2) of the battery can 1 is sealed with the battery lid 6. For example, an electrolytic solution is accommodated in the battery can 1, and the wound electrode body 3 is immersed in the electrolytic solution. Alternatively, an electrolyte that is not a liquid-form electrolytic solution, such as a solid electrolyte, may also be used.

The battery lid 6 is joined to the battery can 1 by laser welding, whereby a battery container airtightly sealed with these battery can 1 and battery lid 6 is configured. In the battery lid 6, a positive electrode external terminal 8A and a negative electrode external terminal 8B are provided. In the lithium-ion secondary battery C1, the wound electrode body 3 is charged through the positive electrode external terminal 8A and the negative electrode external terminal 8B, and power is supplied to an external load.

A gas discharge mechanism 10 is integrally provided in the battery lid 6, and when the gas pressure in the battery container increases up to a predetermined pressure for any reason, a gas discharge valve in the gas discharge mechanism 10 is opened, and a gas is discharged from the inside. This reduces the gas pressure in the battery container and secures the safety of the lithium-ion secondary battery C1. In addition, a liquid injection port 9 (refer to Fig. 2) for filling the battery can with an electrolyte is provided in the battery lid 6 and is configured to be blocked with a liquid injection tap 11 after the injection of the electrolytic solution.

The gas discharge mechanism 10 fluidly connects the inner portion side of the battery container and the outer portion side of the battery container. "Fluidly connecting" refers to the fact that a fluid (a gas or a liquid) that is present in a space between the inner portion side and the outer portion side of the battery container separated by a gas discharge valve 54 (refer to Fig. 4) is capable of circulating when the gas discharge valve 54 has been opened. An example where the gas discharge mechanism 10 is integrally provided in the battery lid 6 has been described, but the structure of the gas discharge mechanism 10 may be manufactured as a separate body and disposed in the battery lid 6.

Fig. 2 shows an appearance seen from diagonally above of parts obtained by disassembling the lithium-ion secondary battery shown in Fig. 1.

The battery can 1 of the lithium-ion secondary battery C1 is a so-called square type and has a rectangular can bottom 22, a square tube-like side wall portion (also referred to as a side peripheral surface in some cases) 21 that rises in a cell height direction (+Y direction) from four sides of this can bottom 22, and the opening portion 1a opened in the cell height direction at the upper end of the side wall portion 21. The side wall portion 21 of the battery can 1 has a pair of wide side wall portions 21a that are separated from each other in a cell thickness direction (+Z direction) and face each other and a pair of narrow side wall portions 21b that are separated from each other in a cell width direction (+X direction) and face each other.

The wound electrode body 3 is accommodated in the battery can 1 in a state of being wrapped and coated with an insulation protective film 2. The wound electrode body 3 has a substantially rectangular flat shape and has a pair of flat surfaces and a pair of curved surfaces having an arc-like cross section that face each other across the pair of flat surfaces. The wound electrode body 3 is inserted into the battery can 1 from one curved surface side and is accommodated in the battery can 1 in a sideways posture state where the winding axis direction is along the cell width direction (+X direction). As the wound electrode body 3, a laminated electrode body can also be used instead of a wound electrode body. The electrode body has a positive electrode having a positive electrode material and a negative electrode having a negative electrode material.

A positive electrode foil connection portion 31d and a negative electrode foil connection portion 32d that are electrode foil exposed portions of the wound electrode body 3 are tied up at least partially in a flat thickness direction to be made into a flat plate shape and are joined to a positive electrode side connection end portion 42A of a positive electrode current collector plate (current collector terminal) 4A and a negative electrode side connection end portion 42B of a negative electrode current collector plate (current collector terminal) 4B, respectively, by ultrasonic welding.

The base ends of the positive electrode current collector plate 4A and the negative electrode current collector plate 4B are connected to the positive electrode external terminal 8A and the negative electrode external terminal 8B, respectively. Gaskets 5 and insulation plates 7 are provided in the battery lid 6 and electrically insulate the positive electrode current collector plate 4A, the negative electrode current collector plate 4B, the positive electrode external terminal 8A, and the negative electrode external terminal 8B from the battery lid 6, respectively.

As the materials of the battery can 1 and the battery lid 6, aluminum, which is a metallic material, or an aluminum alloy is used. As the materials of the positive electrode current collector plate 4A and the positive electrode external terminal 8A, aluminum or an aluminum alloy is used. As the materials of the negative electrode current collector plate 4B and the negative electrode external terminal 8B, copper or a copper alloy is used.

The positive electrode external terminal 8A and the negative electrode external terminal 8B have welded joint portions joined by welding to busbars, not shown, or the like. The welded joint portion has a rectangular block shape that protrudes upward from the battery lid 6 and is disposed such that the lower surface faces the surface of the battery lid 6 and the upper surface becomes parallel to the battery lid 6 at a predetermined height position.

A positive electrode connection portion 12A and a negative electrode connection portion 12B each have a columnar shape that protrudes from the lower surfaces of the positive electrode external terminal 8A and the negative electrode external terminal 8B, respectively, and can be inserted into a positive electrode side through hole 6A and a negative electrode side through hole 6B of the battery lid 6 from the front ends. The positive electrode connection portion 12A and the negative electrode connection portion 12B penetrate the battery lid 6, protrude toward the inside of the battery can 1 more than a positive electrode current collector plate base portion 41A and a negative electrode current collector plate base portion 41B of the positive electrode current collector plate 4A and the negative electrode current collector plate 4B, and are tightened at the front ends to integrally fix the positive electrode external terminal 8A, the negative electrode external terminal 8B, the positive electrode current collector plate 4A, and the negative electrode current collector plate 4B to the battery lid 6.

The gaskets 5 are interposed between the positive electrode external terminal 8A and the negative electrode external terminal 8B and the battery lid 6, and the insulation plates 7 are interposed between the positive electrode current collector plate 4A and the negative electrode current collector plate 4B and the battery lid 6.

The positive electrode current collector plate 4A and the negative electrode current collector plate 4B have the rectangular plate-like positive electrode current collector plate base portion 41A and negative electrode current collector plate base portion 41B that are disposed to face the lower surface of the battery lid 6 and the positive electrode side connection end portion 42A and the negative electrode side connection end portion 42B that are bent at the side ends of the positive electrode current collector plate base portion 41A and the negative electrode current collector plate base portion 41B, extend toward the can bottom 22 along the wide side surfaces of the battery can 1, and are connected in a state of being overlaid to face the positive electrode foil connection portion 31d and the negative electrode foil connection portion 32d of the wound electrode body 3.

In the positive electrode current collector plate base portion 41A and the negative electrode current collector plate base portion 41B, a positive electrode side opening hole 43A and a negative electrode side opening hole 43B into which the positive electrode connection portion 12A and the negative electrode connection portion 12B are inserted are formed, respectively.

The positive electrode external terminal 8A and the positive electrode current collector plate 4A configure a positive electrode side terminal configuration portion, and the negative electrode external terminal 8B and the negative electrode current collector plate 4B configure a negative electrode side terminal configuration portion. In addition, these positive electrode side terminal configuration portion and negative electrode side terminal configuration portion are integrally assembled with the battery lid 6 through the gaskets 5 and the insulation plates 7, whereby a battery lid assembly is configured. In addition, the wound electrode body 3 is assembled with the battery lid assembly, whereby an energy storage element assembly is assembled.

The wound electrode body 3 is supported between the positive electrode current collector plate 4A and the negative electrode current collector plate 4B of the battery lid assembly, the winding axis direction extends parallel to the battery lid 6, the flat surfaces extend along a direction orthogonal to the lower surface of the battery lid 6, and the pair of curved surfaces of the wound electrode body 3 are disposed separately on the side of the battery lid 6 and on the side of the can bottom 22 of the battery can 1.

The insulation protective film 2 covers the wound electrode body 3 that has been assembled with the battery lid assembly from the outside of each of the positive electrode current collector plate 4A and the negative electrode current collector plate 4B and is interposed between the side wall portion 21 and the wound electrode body 3 and between the can bottoms 22 and the wound electrode body 3,in the battery can 1, respectively.

The insulation protective film 2 is made of an insulating synthetic resin material, insulates the battery can 1, the wound electrode body 3, the positive electrode current collector plate 4A, and the negative electrode current collector plate 4B from one another, and protects the wound electrode body 3, the positive electrode current collector plate 4A, and the negative electrode current collector plate 4B such that the wound electrode body 3, the positive electrode current collector plate 4A, and the negative electrode current collector plate 4B do not directly come into contact with the battery can 1 when impact or vibration has been applied to the lithium-ion secondary battery C1 from the outside.

The battery can 1 has dimensions and a shape that make it possible, in a case where the wound electrode body 3 has been inserted into the battery can 1 from the opening portion 1a in a state where the circumference of the wound electrode body 3 is covered with the insulation protective film 2, for the pair of flat surfaces of the wound electrode body 3 and the wide side wall portions 21a of the side wall portions 21 of the battery can 1 to abut on each other in a state where the insulation protective film 2 has been interposed therebetween and for the wound electrode body 3 to be inserted by being pressed with a slight pressing force. In addition, slight gaps are formed between the end surfaces of the wound electrode body 3 on both sides in the winding axis direction and the narrow side wall portions 21b of the side wall portion 21 of the battery can 1.

As described above, the opening portion 1a of the battery can 1 is blocked with the battery lid 6 and sealed by laser-welding the battery lid 6 to the battery can 1. After that, the inside of the battery can 1 is filled with an electrolytic solution. The electrolytic solution is injected into the battery can 1 from the liquid injection port 9 in the battery lid 6. The liquid injection port 9 is blocked with the liquid injection tap 11 after the injection of the electrolytic solution and sealed by laser-welding the liquid injection tap 11 to the battery lid 6.

In the lithium-ion secondary battery having the above-described configuration, for example, in the case of a battery for BEV, the battery capacity per cell is large, accordingly, the cell size becomes large, and the number of components, such as an electrode group, an electrolyte, and an active material, per cell also increases. Therefore, there is a need to enhance the gas discharge capability of a gas discharge mechanism since the amount of a gas generated during the thermal runaway of the cell also increases due to the increase in the number of the components.

The gas discharge capability of the gas discharge mechanism can be enhanced by increasing the frame (size) of the gas discharge mechanism. However, the area occupied by the gas discharge mechanism significantly increases in the battery container.

Therefore, there is a request for the development of a lithium-ion secondary battery including a gas discharge mechanism capable of enhancing the gas discharge capability without increasing the frame of the gas discharge mechanism. Therefore, the present embodiment proposes a configuration as described below.

In the present embodiment, a gas discharge mechanism that is provided in a battery lid includes a first gas discharge passage connected to the inner portion side of the battery container, a second gas discharge passage that is connected to the first gas discharge passage and connected to the outer portion side of the battery container, and a gas discharge valve that is provided in the first gas discharge passage, performs an opening action so that the first gas discharge passage and the second gas discharge passage are connected to each other when the gas pressure in the battery container reaches a predetermined value, and is opened in a shape conforming to the passage cross-sectional shape of the gas discharge passage in the case of performing the opening action, and furthermore, the cross-sectional shape of the second gas discharge passage seen in the outflow direction of a gas when the gas discharge valve has been opened is formed in an inclined shape that does not hinder the flow of a streamline of the gas that flows out of the first gas discharge passage.

According to the present embodiment, since the streamline of the outflowing gas is not hindered by the second gas discharge passage, the gas is capable of smoothly flowing, and the gas discharge capability can be enhanced. Hereinafter, description will be made with an assumption that the opening shape (passage cross-sectional shape) of the gas discharge passage is a circular shape.

Fig. 3 is a view for describing the basic way of thinking of the present embodiment and schematically shows the configuration of the gas discharge mechanism and the flow of the gas. In the following drawings including this drawing, the plate thickness (t) of the battery lid 6 in a part where the gas discharge path is formed and the opening diameter (d) of the gas discharge passage do not have a precise dimensional relationship, and the plate thickness (t) is drawn in an enlarged manner.

In Fig. 3, the battery lid 6 has the plate thickness (t), and a gas discharge passage 50 is formed in a plate thickness direction (a direction orthogonal to the front surface and the rear surface of the battery lid). A gas discharge valve is not shown. The gas discharge passage 50 is composed of a first gas discharge passage 51 fluidly connected to an inner portion side (SPin) of the battery container and a second gas discharge passage 52 that is fluidly connected to the first gas discharge passage 51 and fluidly connected to an outer portion side (SPout) of the battery container.

Here, "being fluidly connected" means that a fluid (a gas or a liquid) that is present in a space between the inner portion side and the outer portion side of the battery container separated by the gas discharge valve is capable of circulating through the first gas discharge passage 51 and the second gas discharge passage 52 when the gas discharge valve has been opened.

The passage cross-sectional shape (in a direction orthogonal to the plate thickness direction) including the openings of the first gas discharge passage 51 and the second gas discharge passage 52 is a circular shape, and the first gas discharge passage 51 and the second gas discharge passage 52 are coaxially formed. Therefore, an outlet opening of the first gas discharge passage 51 and an inlet opening of the second gas discharge passage 52 are given the same opening diameter, matched, and connected together.

The first gas discharge passage 51 is formed in a columnar shape (which is actually a space and can also be referred to as a cylindrical shape) in the plate thickness direction, and the second gas discharge passage 52 is formed in a truncated cone shape (which is actually a space and can also be referred to as a truncated conical tube shape) in the plate thickness direction. In addition, a connection portion between the first gas discharge passage 51 and the second gas discharge passage 52 is given the same opening diameter (d). Here, as shown in the drawing, an inclined portion 53 that is linearly inclined, in which the opening diameter (d) of the second gas discharge passage is formed to continuously and gradually increase toward the outer portion side (SPout) of the battery container, and the cross-sectional shape seen in the outflow direction of the gas expands in a direction away from the axial line of the second gas discharge passage 52, is formed.

Next, the behavior of the gas that flows through the first gas discharge passage 51 and the second gas discharge passage 52 will be described. When the gas generated in the battery container flows into the first gas discharge passage 51 as indicated by a streamline (FLW) of the gas, a flow shrinkage portion (ACF) is formed in the middle of the first gas discharge passage 51, and when the gas then flows out of the first gas discharge passage 51, the streamline expands to spread outward. Particularly, the streamline on the outer peripheral side strongly tends to expand outward. The streamline of the gas indicated herein is an imaginary illustration of the flow of the gas based on streamlines that are mentioned in fluid dynamics.

In addition, a gas discharge passage in the gas discharge mechanism as a comparative example with respect to the present example has a shape in which the first gas discharge passage 51 extends as indicated by dashed lines (DL), the flow of the expanded streamline of the gas is hindered at this part, and there is a tendency that the amount of the gas discharged is suppressed. This is attributed to the fact that the streamline is disturbed in the region of the dashed lines (DL). The hindrance to the flow of the streamline refers to a phenomenon in which particularly the gas that flows on the outside of the gas flow is interrupted by other physical obstacles (here, the passage wall of the gas discharge passage) to form a vortex or become incapable of smoothly flowing and the streamline is disturbed.

Therefore, in the present embodiment, the opening diameter (d) of the second gas discharge passage 52 is formed to continuously and gradually increase toward the outer portion side (SPout) of the battery container so that the direction of the streamline of the gas that has flowed out of the first gas discharge passage 51 is not disturbed. That is, the inclined portion 53 that is inclined such that the cross-sectional shape seen in the outflow direction of the gas expands in the direction away from the axial line of the second gas discharge passage 52 is formed. This inclined portion 53 forms a shape that does not hinder the flow of the streamline of the gas that flows out to the second gas discharge passage 52 from the first gas discharge passage 51.

Here, the shape that does not hinder the flow of the streamline refers to a shape in which the gas that flows on the outside of the gas streamline is not interrupted and the gas can be made to smoothly flow. That is, the shape is a shape in which the flow of the gas that flows on the outside of the gas flow does not come into contact with or collide with other obstacles (here, the passage wall of the gas discharge passage).

This makes it possible for the streamline of the gas that has flowed out of the first gas discharge passage 51 to smoothly flow out without being disturbed, unlike in conventional configurations, and makes it possible to avoid the amount of the gas discharged from being suppressed. As a result, it becomes possible to reduce the weight of the battery lid 6 and secure a sufficient amount of the gas discharged.

Next, a specific configuration of the first embodiment will be described. Fig. 4 shows a configuration in which the gas discharge valve is disposed in the gas discharge mechanism shown in Fig. 3. Here, as described above, the plate thickness (t) of the battery lid 6 in the part where the gas discharge path is formed and the opening diameter (d) of the gas discharge passage do not have a precise dimensional relationship, and the plate thickness (t) is drawn in an enlarged manner. The same reference signs in Fig. 4 as those in Fig. 3 indicate the same configurations and will not be thus described again.

In Fig. 4, the gas discharge valve 54 has been press-fitted into the first gas discharge passage 51 side of the connection portion between the first gas discharge passage 51 and the second gas discharge passage 52. The gas discharge valve 54 includes a pressure receiving surface 55 that receives the pressure of the gas and a press-fit surface 56 integrally formed with this pressure receiving surface 55. The press-fit surface 56 has been press-fitted into the inner peripheral wall surface of the first gas discharge passage 51. The opening period of the gas discharge valve 54 can be adjusted from this press-fitting force and the relationship between the area of the pressure receiving surface and the gas pressure.

Separately from this press-fitted gas discharge valve 54, the gas discharge valve 54 can be integrally formed with the battery lid 6 on the first gas discharge passage 51 side of the connection portion between the first gas discharge passage 51 and the second gas discharge passage 52. That is, a thin-walled film part that crosses and closes the first gas discharge passage 51 is formed as the gas discharge valve 54, and this thin-walled film part is integrally formed with the battery lid 6. In addition, the opening period of the gas discharge valve 54 can be adjusted with the thickness of this film part.

An example where the gas discharge passage 51 has a flow path having substantially the same area (or opening diameter) as the area (or opening diameter) of the gas discharge passage 51 side of the gas discharge valve 54 in at least a part leading to the gas discharge valve 54 has been shown. For example, in the first gas discharge passage 51, the area (or opening diameter) of the opening portion of an inlet opening portion 51in is substantially the same as the area of the gas discharge valve 54. Alternatively, the inlet opening portion 51in has a flow path part having a larger area (or opening diameter) than the area of the gas discharge valve 54, and a main part of the first gas discharge passage 51 on the gas discharge valve 54 side has substantially the same area (or opening diameter) as the area (or opening diameter) of the gas discharge valve 54 on the first discharge passage side.

Here, it is important for the gas discharge valve 54 not to disturb the streamline of the gas as much as possible when the gas discharge valve 54 has been opened. In conventional split-type gas discharge valves, streamlines are often disturbed when the valves have been opened. Therefore, in the present embodiment, a valve that bursts out and is withdrawn from the gas discharge passage 51 when the valve has been opened is used as the gas discharge valve 54. A state where the gas discharge valve 54 has been withdrawn is a state as shown in Fig. 3. That is, in the case of performing an opening action, the gas discharge valve 54 is opened in a shape conforming to the passage cross-sectional shape of the first gas discharge passage.

In addition, when the gas pressure in the battery container reaches a predetermined value for any reason, the gas discharge valve 54 bursts out against the press-fitting force due to the pressure of the gas and withdraws from the battery lid 6. Here, the predetermined value of the gas pressure at which the gas discharge valve 54 withdraws is a gas pressure at which the gas discharge valve 54 opens as a safety valve before the internal gas of the battery container reaches a pressure at which the battery container is damaged. This predetermined value is selected as appropriate depending on the strength of the battery container or the like.

Instead of the press-fit type gas discharge valve 54 shown in Fig. 4, it is also possible to integrally form a gas discharge valve made of a thin-walled film portion with the battery lid 6 as described above by machining. That is, a film portion that is thinner than the plate thickness of the battery lid 6 is integrally formed in a part of the first gas discharge passage 51 and used as the gas discharge valve 54.

When the gas discharge valve 54 is formed on the first gas discharge passage 51 side including a boundary part where the first gas discharge passage 51 and the second gas discharge passage 52 are connected to each other as shown in the drawing, it is possible to form the gas discharge valve 54 by machining. This makes it possible to form the gas discharge valve 54 as a thin-walled film portion integrally formed with the battery lid 6.

In addition, as a pressure receiving surface of the film portion as the gas discharge valve 54, an annular thin-walled part in which a side that is continuous from the wall surface of the first gas discharge passage 51 is thinner than the vicinity of the central portion is formed rather than the part having a uniform thickness. For example, an annular groove is formed along the peripheral end portion of the pressure receiving surface. Therefore, when a gas pressure has been applied thereto, the film portion as the gas discharge valve 54 is split in a circular shape from this annular groove, and the pressure receiving surface is cleanly peeled off.

Alternatively, it is also possible to use a single swinging door-type gas discharge valve although the streamline is somewhat disturbed. For example, the groove is not formed in a part of the peripheral end portion in which the above-described annular groove has been formed. The groove-free part in the annular groove is not peeled off and remains when the gas discharge valve is split, and the pressure receiving surface of the film portion opens in a single-swinging-door manner.

In the case of performing an opening action, the gas discharge valve 54 is opened in a shape along the passage cross-sectional shape of the gas discharge passage as described above.

In addition, this gas discharge valve 54 can be formed by machining as described above. For example, the gas discharge valve 54 can be formed in the boundary part by forming the first gas discharge passage 51, which is a columnar space, by cutting and forming the second gas discharge passage 52 formed of the inclined portion 53 by, similarly, cutting. Alternatively, the gas discharge valve 54 can be formed by pressing (drawing with a punch and a die).

Fig. 4B shows a first modification example of the first embodiment, in which the gas discharge valve 54 has been formed by pressing. In this case, a film-like gas discharge valve 54 is integrally formed with the battery lid 6 in the boundary part by forming the second gas discharge passage 52 with a punch and forming the first gas discharge passage 51 with a die. Here, the first gas discharge passage 51 has a straight tubular cross section in the axial direction, the second gas discharge passage 52 has a trapezoidal cross section in the axial direction, and the gas discharge passages 51 and 52 having necessary shapes can be formed using a die and a punch having corresponding shapes, respectively.

In addition, Fig. 4C shows a second modification example, in which the gas discharge valve 54 also has been formed by pressing. In this case, a film-like gas discharge valve 54 is integrally formed with the battery lid 6 in the boundary part by forming the second gas discharge passage 52 with a punch and forming the first gas discharge passage 51 with a die.

Here, the first gas discharge passage 51 has a trapezoidal cross section in the axial direction, the second gas discharge passage 52 has a trapezoidal cross section in the axial direction, the connection portion between the first gas discharge passage 51 and the second gas discharge passage 52 thus becomes the narrowest passage, and the film-like gas discharge valve 54 is formed in this part. Therefore, the gas discharge passages 51 and 52 having necessary shapes can be formed using a die and a punch having corresponding shapes, respectively.

Axial centers C of the first gas discharge passage 51 and the second gas discharge passage 52 are preferably the same axial center from the viewpoint of the uniformity of the flow of the gas discharge.

In addition, when the gas discharge valve 54 withdraws, the gas discharge passage appears as shown in Fig. 3, it becomes possible for the streamline of the gas that has flowed out of the first gas discharge passage 51 to smoothly flow out without being disturbed, unlike in conventional configurations, and it becomes possible to avoid the amount of the gas discharged from being suppressed. As a result, it becomes possible to reduce the weight of the battery lid 6 and secure a sufficient amount of the gas discharged. Even in this case, the gas discharge valve 54 is opened in a shape along the passage cross-sectional shape of the gas discharge passage in the case of performing an opening action.

Next, the influence of the inclined portion 53 formed in the second gas discharge passage 52 will be described. The fact that the inclined portion 53 has an influence on the streamline on the outer peripheral side of the flow of the gas has been confirmed by a simulation, and an example thereof will be simply described below. The forms of the gas discharge passages 51 and 52 and the gas discharge valve 54 in the battery lid 6 used in the following simulation are the forms shown as the first modification example in Fig. 4B.

Parameters used for a gas flow model of the simulation are the plate thickness (t) of the battery lid 6 in the part where the gas discharge path is formed, the disposition length (1) of the gas discharge valve 54, the opening diameter (din) of the inlet opening portion 51in in the first gas discharge passage 51, and the inclination angle (*θ*) of the inclined portion 53 as shown in Fig. 5. The simulation was executed using the plate thickness (t) of the battery lid 6, the disposition length (1) of the gas discharge valve 54, and the inlet opening diameter (din) of the first gas discharge passage 51 as constant fixed values and the inclination angle (*θ*) of the inclined portion 53 as a variable.

Fig. 6 shows the results. As shown in Fig. 6A, the inlet opening diameter (din) of the first gas discharge passage 51 is set to 5 mm, the plate thickness (t) of the battery lid 6 in the part where the gas discharge path is formed is set to 2 mm, the disposition length (1) of the gas discharge valve 54 is set to 1 mm, and the inclination angle (*θ*) of the inclined portion 53 is a variable.

"Inclination angle (*θ*) = 0° " that is present in the horizontal axis of the graph in Fig. 6B corresponds to an outlet opening portion when the first gas discharge passage 51 has been extended as indicated by the dashed line (DL) shown in Fig. 3. In addition, the flow rate of the gas is the flow rate at an outlet opening portion 52out in the second gas discharge passage 52, and the influence on a change in the inclination angle (*θ*) is expressed as the ratio to the flow rate when the inclination angle (*θ*) =0°.

As is clear from the graph of Fig. 6B, it is found that the flow rate ratio becomes larger as the inclination angle (*θ*) of the inclined portion 53 becomes larger. This indicates that the gas flow rate increases as the flow rate ratio becomes larger. Particularly, it is understood that the flow rate of the gas increases from an inclination angle (*θ*) of 55° . Therefore, it becomes possible to effectively increase the flow rate of the gas by setting the inclination angle (*θ*) to 55° or more at the time of actual design.

Furthermore, the flow rate ratio reaches 110% at an inclination angle of near 60°, and a substantial effect can be obtained. The inclination angle is preferably 60° or more. In addition, the flow rate ratio reaches 120% at an inclination angle of near 75°, and a significant effect can be obtained. The inclination angle is preferably 60° or more to more effectively discharge the gas.

When the inclination angle (*θ*) is increased, the plate thickness (t) in this part becomes thin, the mechanical strength decreases, and there is thus a need to select an inclination angle (*θ*) at which a sufficient plate thickness (t) can be secured from the viewpoint of the mechanical strength. This may be determined as a design specification of the battery.

Next, Fig. 7 shows the results of the simulation when the plate thickness (t) of the battery lid 6 in the part where the gas discharge path is formed has been changed. Parameters are the same as those in Fig. 6, and the results are obtained in a case where the plate thickness (t) of the battery lid 6 is changed to 0.2 mm, 2 mm, and 10 mm.

As is clear from Fig. 7B, it is found that, even when the inclination angle (*θ*) remains the same, the flow rate of the gas increases as the plate thickness (t) becomes larger. It becomes possible to effectively increase the flow rate of the gas by setting the plate thickness (t) to be large at the time of actual design.

When compared with the inlet opening diameter (din) of the first gas discharge passage 51, the plate thickness (t) of the battery lid 6 in the part where the gas discharge path is formed preferably has a length that is 40% or more of the length of the inlet opening diameter (din). More preferably, the plate thickness (t) of the battery lid 6 in the part where the gas discharge path is formed preferably has a length that is twice or more the length of the inlet opening diameter (din).

However, when the plate thickness (t) increases, an increase in the weight of the battery lid 6 is caused, and there is thus a need to select the battery lid 6 having a necessary plate thickness (t) from the viewpoint of the weight. This may be determined as a design specification of the battery.

In a case where there is no intention of thickening the plate thickness of the battery lid 6, for example, the plate thickness (t) of the battery lid 6 in the part where the gas discharge mechanism 10 (the gas discharge path) is formed is made to be thicker than the circumference of the gas discharge mechanism 10. In a case where the gas discharge mechanism 10 is attached to the battery lid 6 (a case where the gas discharge mechanism 10 is not an integral structure with the battery lid 6, but a separate structure), the setting of the thickness becomes easy, which is preferable. In addition, for example, the first gas discharge passage 51 and the second gas discharge passage 52 have openings with a circular cross section. The axial lines of the first gas discharge passage 51 and the second gas discharge passage 52 are common (the same axial line). Other embodiments can also have the same structure except an embodiment where this structure is changed.

As described above, in the present embodiment, the gas discharge mechanism that is provided in the battery lid 6 includes the first gas discharge passage 51 connected to the inner portion side (SPin) of the battery container, the second gas discharge passage 52 that is connected to the first gas discharge passage 51 and connected to the outer portion side (SPout) of the battery container, and the gas discharge valve 54 that is provided in the first gas discharge passage 51 and performs an opening action so that the first gas discharge passage 51 and the second gas discharge passage 52 are connected to each other when the gas pressure in the battery container reaches a predetermined value, and furthermore, the cross-sectional shape of the second gas discharge passage 52 seen in the outflow direction of the gas when the gas discharge valve 54 has been opened is formed in an inclined shape that does not hinder the flow of the streamline of the gas that flows out of the first gas discharge passage 51.

According to the present embodiment, since the streamline of the outflowing gas is not hindered by the second gas discharge passage 52, the gas is capable of smoothly flowing, and the gas discharge capability can be enhanced.

The place where the gas discharge mechanism 10 is formed is not limited to the battery lid 6, and it is also possible to provide the gas discharge mechanism 10 anywhere in the battery container in which the energy storage element is accommodated. Therefore, the present embodiment can be applied even in a case where the battery container does not have the battery lid 6. In the present embodiment, the gas discharge mechanism 10 is provided in the battery lid 6 in which the positive electrode external terminal 8A or the negative electrode external terminal 8B is formed. The gas discharge mechanism 10 is provided in the battery lid 6 having a predetermined thickness and predetermined stiffness as in the present embodiment, and it is thus possible to obtain a highly reliable valve opening action. It becomes easy to form the gas discharge mechanism 10 even in a case where the gas discharge valve 54 is integrally formed with the battery container.

In the present embodiment, the gas discharge valve 54 is formed at a position located toward the second gas discharge passage 52 from the inlet opening portion 51in side end of the first gas discharge passage 51. Therefore, the gas flow having a stable flow passes through the gas discharge valve, which is preferable.

### Example 2

Next, a second embodiment of the present invention will be described. In the first embodiment, the passage cross-sectional shape of the second gas discharge passage 52 is linear in the inclined portion 53, but the second embodiment is different therefrom in terms of the fact that the passage cross-sectional shape of the second gas discharge passage 52 is made to form a convex arc-like portion 57. The arc-like portion 57 is a portion formed by rounding the corner portion (the portion indicated by the dashed line (DL) in Fig. 3) of the outlet opening portion 52out as shown in Fig. 8, and in the present embodiment, a portion that is referred to as "R" in mechanical drawings is employed.

That is, in the cross-sectional shape of the second gas discharge passage 52, the opening diameter of the second gas discharge passage 52 is formed to continuously and gradually increase toward the outer portion side (SPout) of the battery container, and the cross-sectional shape seen in the outflow direction of the gas is formed in an arc shape (arc-like portion 57) that expands at predetermined radii in the direction away from the axial line of the second gas discharge passage 52 (here, in the present embodiment, the arc has been exemplified as one example of the arc-like shape, but the arc-like shape may be a shape other than the arc; in the present embodiment, the arc is exemplified as the arc-like portion 57, and the arc-like portion will be thus expressed as the arc portion 57 below). Furthermore, the arc portion 57 is formed of a convex arc protruding toward the axial line (C) side. This arc portion 57 forms a shape that does not hinder the flow of the streamline of the gas that flows out to the second gas discharge passage 52 from the first gas discharge passage 51.

In Fig. 8, the gas discharge valve 54 has been press-fitted into the first gas discharge passage 51 side of the connection portion between the first gas discharge passage 51 and the second gas discharge passage 52. The position of the gas discharge valve 54 depends on the arc radius (r). That is, when the arc radius (r) is long, the press-fit position of the gas discharge valve 54 is close to the inlet opening portion 51in side, and when the arc radius (r) is short, the press-fit position of the gas discharge valve 54 is far from the inlet opening portion 51in side.

The gas discharge valve 54 includes a pressure receiving surface 55 that receives the pressure of the gas and a press-fit surface 56 integrally formed with this pressure receiving surface 55. The press-fit surface 56 has been press-fitted into the inner peripheral wall surface of the first gas discharge passage 51. The opening period of the gas discharge valve 54 can be adjusted from this press-fitting force and the relationship between the area of the pressure receiving surface and the gas pressure.

Here, it is important for the gas discharge valve 54 not to disturb the streamline of the gas as much as possible when the gas discharge valve 54 has been opened. In conventional split-type gas discharge valves, streamlines are often disturbed when the valves have been opened. Therefore, in the present embodiment, as the gas discharge valve 54, a valve that bursts out and is withdrawn from the first gas discharge passage 51 when the valve has been opened is used.

In addition, when the pressure of the gas in the battery container reaches a predetermined value for any reason, the gas discharge valve 54 bursts out against the press-fitting force due to the pressure of the gas and withdraws from the battery lid 6. When the gas discharge valve 54 withdraws, the streamline of the gas that has flowed out of the first gas discharge passage 51 flows along the arc portion 57. As described above, it becomes possible for the streamline of the gas to smoothly flow out without being disturbed, unlike in conventional configurations, and it becomes possible to avoid the amount of the gas discharged from being suppressed. As a result, it becomes possible to reduce the weight of the battery lid 6 and secure a sufficient amount of the gas discharged.

Next, the influence of the arc portion 57 formed in the second gas discharge passage 52 will be described. The fact that the arc portion 57 has an influence on the streamline on the outer peripheral side of the flow of the gas has been confirmed by a simulation, and an example thereof will be simply described below.

Parameters used for a gas flow model of the simulation are the plate thickness (t) of the battery lid 6 in the part where the gas discharge path is formed, the disposition length (1) of the gas discharge valve 54, the inlet opening diameter (din) of the inlet opening portion 51in in the first gas discharge passage 51, and the arc radius (r) of the arc portion 57 as shown in Fig. 9. The simulation was executed using the plate thickness (t) of the battery lid 6 and the inlet opening diameter (din) of the first gas discharge passage 51 as constant fixed values and the arc radius (r) of the arc portion 57 as a variable. The disposition length (1) of the gas discharge valve 54 depends on the arc radius (r) and was thus obtained by calculation each time.

Fig. 10B shows the results. As shown in Fig. 10A, the inlet opening diameter (din) of the first gas discharge passage 51 is set to 5 mm, the plate thickness (t) of the battery lid 6 in the part where the gas discharge path is formed is set to 2 mm, and the arc radius (r) of the arc portion 57 is a variable.

"Arc radius (r) = 0.001 mm" that is present in the vertical axis of the graph in Fig. 10B is an arc radius of the corner portion of the outlet opening portion when the first gas discharge passage 51 has been extended that is indicated by a dashed line (DL) shown in Fig. 3. In addition, the flow rate of the gas is the flow rate at the outlet opening portion 52out in the second gas discharge passage 52, and the influence on a change in the arc radius (r) is expressed as the ratio to the flow rate when the arc radius (r) = 0.001 mm.

As is clear from the graph of Fig. 10B, it is found that the flow rate ratio becomes larger as the arc radius (r) of the arc portion 57 becomes larger. This indicates that the gas flow rate increases as the flow rate ratio becomes larger. Particularly, it is understood that the flow rate of the gas increases from an arc radius (r) of 1 mm. Therefore, it becomes possible to effectively increase the flow rate of the gas by setting the arc radius (r) based on the graph of Fig. 10 at the time of actual design.

The flow path having a convex arc shape may not be limited to a precise circumferential shape. For example, the flow path may be a flow path having a shape in which, in the plate thickness (t) direction of the second gas discharge passage 52, a change Δd2 in the opening diameter d (in a direction orthogonal to t) at a place (t2 + Δt) shifted toward the outlet opening portion 52out side by Δt from a second place (referred to as t2) that is positioned on the outlet opening portion 52out side of a first place (referred to as t1) is larger than a change Δd1 in the opening diameter d (in a direction orthogonal to t) from the first place to a place (t1 + Δt) shifted toward the outlet opening portion 52out side by Δt.

In addition, for example, in a direction of the plate thickness (t) of the battery lid 6 in the part where the gas discharge path is formed, the arc portion 57 is preferably formed to be larger than the half. Specifically, the length of the second gas discharge passage 52 is larger than the length of the first gas discharge passage 51.

As described above, in the present embodiment, the gas discharge mechanism that is provided in the battery lid 6 includes the first gas discharge passage 51 connected to the inner portion side (SPin) of the battery container, the second gas discharge passage 52 that is connected to the first gas discharge passage 51 and connected to the outer portion side (SPout) of the battery container, and the gas discharge valve 54 that is provided in the first gas discharge passage 51 and performs an opening action so that the first gas discharge passage 51 and the second gas discharge passage 52 are connected to each other when the gas pressure in the battery container reaches a predetermined value, and furthermore, the cross-sectional shape of the second gas discharge passage 52 seen in the outflow direction of the gas when the gas discharge valve 54 has been opened is formed in a convex arc shape that does not hinder the flow of the streamline of the gas that flows out of the first gas discharge passage 51.

According to the present embodiment, since the streamline of the outflowing gas is not hindered by the second gas discharge passage 52, the gas is capable of smoothly flowing, and the gas discharge capability can be enhanced.

### Example 3

Next, a third embodiment of the present invention will be described. In the second embodiment, the passage cross-sectional shape of the second gas discharge passage 52 is the convex arc-like portion 57, but the third embodiment is different therefrom in terms of the fact that the passage cross-sectional shape of the second gas discharge passage 52 is made to form a concave arc-like portion 58. The arc-like portion 58 is a portion formed by scraping off the wall of the corner portion (the portion indicated by the dashed line (DL) in Fig. 3) of the outlet opening portion 52out in an arc shape at a predetermined radius (r) as shown in Fig. 11.

That is, in the cross-sectional shape of the second gas discharge passage 52, the opening diameter of the second gas discharge passage 52 is formed to continuously and gradually increase toward the outer portion side (SPout) of the battery container, and the cross-sectional shape seen in the outflow direction of the gas is formed in an arc shape (arc-like portion 58) that expands at predetermined radii in the direction away from the axial line of the second gas discharge passage 52 (here, in the present embodiment, the arc has been exemplified as one example of the arc-like shape, but the arc-like shape may be a shape other than the arc; in the present embodiment, the arc is exemplified as the arc-like portion 58, and the arc-like portion will be thus expressed as the arc portion 58 below).

Furthermore, the arc portion 58 is formed of a concave arc that recedes from the axial line (C) side. This arc portion 58 forms a shape that does not hinder the flow of the streamline of the gas that flows out to the second gas discharge passage 52 from the first gas discharge passage 51.

In Fig. 11, the gas discharge valve 54 has been press-fitted into the first gas discharge passage 51 side of the connection portion between the first gas discharge passage 51 and the second gas discharge passage 52. The position of the gas discharge valve 54 depends on the arc radius (r). That is, when the arc radius (r) is long, the press-fit position of the gas discharge valve 54 is close to the inlet opening portion 51in side, and when the arc radius (r) is short, the press-fit position of the gas discharge valve 54 is far from the inlet opening portion 51in side.

The gas discharge valve 54 includes a pressure receiving surface 55 that receives the pressure of the gas and a press-fit surface 56 integrally formed with this pressure receiving surface 55. The press-fit surface 56 has been press-fitted into the inner peripheral wall surface of the first gas discharge passage 51. The opening period of the gas discharge valve 54 can be adjusted from this press-fitting force and the relationship between the area of the pressure receiving surface and the gas pressure.

Here, it is important for the gas discharge valve 54 not to disturb the streamline of the gas as much as possible when the gas discharge valve 54 has been opened. In conventional split-type gas discharge valves, streamlines are often disturbed when the valves have been opened. Therefore, in the present embodiment, as the gas discharge valve 54, a valve that bursts out and is withdrawn from the first gas discharge passage 51 when the valve has been opened is used.

In addition, when the pressure of the gas in the battery container reaches a predetermined value for any reason, the gas discharge valve 54 bursts out against the press-fitting force due to the pressure of the gas and withdraws from the battery lid 6. When the gas discharge valve 54 withdraws, the streamline of the gas that has flowed out of the first gas discharge passage 51 flows along the arc portion 58. As described above, it becomes possible for the streamline of the gas to smoothly flow out without being disturbed, unlike in conventional configurations, and it becomes possible to avoid the amount of the gas discharged from being suppressed. As a result, it becomes possible to reduce the weight of the battery lid 6 and secure a sufficient amount of the gas discharged.

The flow path having a concave arc shape may not be limited to a precise circumferential shape. For example, the flow path may be a flow path having a shape in which, in the plate thickness (t) direction of the second gas discharge passage 52, a change Δd2 in the opening diameter d (in a direction orthogonal to t) at a place (t2 + Δt) shifted toward the outlet opening portion 52out side by Δt from a second place (referred to as t2) that is positioned on the outlet opening portion 52out side of a first place (referred to as t1) is smaller than a change Δd1 in the opening diameter d (in a direction orthogonal to t) from the first place to a place (t1 + Δt) shifted toward the outlet opening portion 52out side by Δt.

As described above, in the present embodiment, the gas discharge mechanism that is provided in the battery lid 6 includes the first gas discharge passage 51 connected to the inner portion side (SPin) of the battery container, the second gas discharge passage 52 that is connected to the first gas discharge passage 51 and connected to the outer portion side (SPout) of the battery container, and the gas discharge valve 54 that is provided in the first gas discharge passage 51 and performs an opening action so that the first gas discharge passage 51 and the second gas discharge passage are connected to each other when the gas pressure in the battery container reaches a predetermined value, and furthermore, the cross-sectional shape of the second gas discharge passage 52 seen in the outflow direction of the gas when the gas discharge valve 54 has been opened is formed in a concave arc shape that does not hinder the flow of the streamline of the gas that flows out of the first gas discharge passage 51.

According to the present embodiment, since the streamline of the outflowing gas is not hindered by the second gas discharge passage 52, the gas is capable of smoothly flowing, and the gas discharge capability can be enhanced.

### Example 4

Next, a fourth embodiment of the present invention will be described. In the first to third embodiments, the passage cross-sectional shapes of the second gas discharge passages 52 are the inclined portion 53, the convex arc portion 57, and the concave arc portion 58, but the fourth embodiment is different therefrom in terms of the fact that the passage cross-sectional shape of the second gas discharge passage 52 is made to form a step-like large diameter portion 59 relative to the first gas discharge passage 51.

The large diameter portion 59 as one example of forming a portion having a step shape is formed in a columnar shape (which is actually a space and can also be referred to as a cylindrical shape) as shown in Fig. 12 and is formed in an outlet opening diameter (dout) larger than the inlet opening diameter (din) of the first gas discharge passage 51 relative to the inlet opening diameter (din) (refer to Fig. 14). This large diameter portion 59 forms a shape that does not hinder the flow of the streamline of the gas that flows out to the second gas discharge passage 52 from the first gas discharge passage 51.

In Fig. 12, the first gas discharge passage 51 is formed in a columnar shape (which is actually a space and can also be referred to as a cylindrical shape) in the plate thickness direction, and the second gas discharge passage 52 is also formed in a columnar shape (which is actually a space and can also be referred to as a cylindrical shape) in the plate thickness direction. The gas discharge valve 54 has been press-fitted into the first gas discharge passage 51 side of the connection portion between the first gas discharge passage 51 and the second gas discharge passage 52.

The gas discharge valve 54 includes a pressure receiving surface 55 that receives the pressure of the gas and a press-fit surface 56 integrally formed with this pressure receiving surface 55. The press-fit surface 56 has been press-fitted into the inner peripheral wall surface of the first gas discharge passage 51. The opening period of the gas discharge valve 54 can be adjusted from this press-fitting force and the relationship between the area of the pressure receiving surface and the gas pressure.

In addition, when the pressure of the gas in the battery container reaches a predetermined value for any reason, the gas discharge valve 54 bursts out against the press-fitting force due to the pressure of the gas and withdraws from the battery lid 6. When the gas discharge valve 54 withdraws, the streamline of the gas that has flowed out of the first gas discharge passage 51 flows to the second gas discharge passage 52 having a large outlet opening diameter (dout), and it thus becomes possible for the streamline of the gas to smoothly flow out without being disturbed, unlike in conventional configurations, and it becomes possible to avoid the amount of the gas discharged from being suppressed. As a result, it becomes possible to reduce the weight of the battery lid 6 and secure a sufficient amount of the gas discharged.

Next, the influence of the large diameter portion 59 formed in the second gas discharge passage 52 will be described. The fact that the large diameter portion 59 has an influence on the streamline on the outer peripheral side of the flow of the gas has been confirmed by a simulation, and an example thereof will be simply described below.

Parameters used for a gas flow model of the simulation are the plate thickness (t) of the battery lid 6 in the part where the gas discharge path is formed, the disposition length (1) of the gas discharge valve 54, the opening diameter (din) of the inlet opening portion 51in in the first gas discharge passage 51, and the opening diameter (dout) of the outlet opening portion 52out as shown in Fig. 13. The simulation was executed using the plate thickness (t) of the battery lid 6, the disposition length (1) of the gas discharge valve 54, and the inlet opening diameter (din) of the first gas discharge passage 51 as constant fixed values and the outlet opening diameter (dout) of the outlet opening portion 52out as a variable.

Fig. 14 shows the results. As shown in Fig. 14A, the inlet opening diameter (din) of the first gas discharge passage 51 is set to 5 mm, the plate thickness (t) of the battery lid 6 in the part where the gas discharge path is formed is set to 2 mm, the disposition length (1) of the gas discharge valve 54 is set to 1 mm, and the outlet opening diameter (dout) of the second gas discharge passage 52 is a variable.

"Outlet opening diameter 5 mm" that is present in the vertical axis of the graph in Fig. 14B corresponds to the outlet opening portion when the first gas discharge passage 51 has been extended as indicated by the dashed line (DL) shown in Fig. 3. In addition, the flow rate of the gas is the flow rate at the outlet opening portion 52out in the second gas discharge passage 52, and the influence on a change in the outlet opening diameter (dout) is expressed as the ratio to the flow rate when the outlet opening diameter is 5 mm.

As is clear from the graph of Fig. 14B, it is found that the flow rate ratio becomes larger as the outlet opening diameter (dout) becomes larger. This indicates that the gas flow rate increases as the flow rate ratio becomes larger. Particularly, it is understood that the flow rate of the gas increases from an outlet opening diameter (dout) of 7 mm. Therefore, it becomes possible to effectively increase the flow rate of the gas by setting the outlet opening diameter (dout) based on the graph of Fig. 14 at the time of actual design.

The outlet opening diameter of 5 mm can be considered as the opening diameter of the second gas discharge passage 52 at the first gas discharge passage 51 side end. Therefore, the outlet opening diameter (dout) is preferably larger than 1.5 times the opening diameter of the second gas discharge passage 52 at the first gas discharge passage 51 side end. Furthermore, the flow rate ratio reaches 110% at an outlet opening diameter (dout) of 10 mm, and a substantial effect can be obtained. The outlet opening diameter is preferably twice or more. In addition, the flow rate ratio reaches approximately 120% at an outlet opening diameter (dout) of 15 mm, and a significant effect can be obtained. The outlet opening diameter is preferably set to three times or more to more effectively discharge the gas.

As the step-like large diameter portion, it is also possible to provide, for example, a plurality of step portions. A structure (middle step) having an opening diameter that is larger than the opening diameter of the second gas discharge passage 52 at the first gas discharge passage 51 side end and smaller than the outlet opening diameter (dout) may be provided between the first gas discharge passage 51 side end of the second gas discharge passage 52 and the outlet. This structure is easier to manufacture than to manufacture inclined shapes, and the difference between adjacent opening diameters becomes smaller than that in the structure of the drawing, which is preferable.

As described above, in the present embodiment, the gas discharge mechanism that is provided in the battery lid 6 includes the first gas discharge passage 51 connected to the inner portion side (SPin) of the battery container, the second gas discharge passage 52 that is connected to the first gas discharge passage 51 and connected to the outer portion side (SPout) of the battery container, and the gas discharge valve 54 that is provided in the first gas discharge passage 51 and performs an opening action so that the first gas discharge passage 51 and the second gas discharge passage are connected to each other when the gas pressure in the battery container reaches a predetermined value, and furthermore, the cross-sectional shape of the second gas discharge passage 52 seen in the outflow direction of the gas when the gas discharge valve 54 has been opened is formed in a step-like large diameter portion that does not hinder the flow of the streamline of the gas that flows out of the first gas discharge passage 51.

According to the present embodiment, since the streamline of the outflowing gas is not hindered by the second gas discharge passage 52, the gas is capable of smoothly flowing, and the gas discharge capability can be enhanced.

### Example 5

Next, a fifth embodiment of the present invention will be described. In the fourth embodiment, the axial lines of the first gas discharge passage 51 and the second gas discharge passage 52 are common (coaxial), but the fifth embodiment is different therefrom in terms of the fact that the axial lines of the first gas discharge passage 51 and the second gas discharge passage 52 are different axial lines.

As shown in Fig. 15, the first gas discharge passage 51 and the second gas discharge passage 52 are each formed in a columnar shape (that is actually spaces and can also be referred to as a cylindrical shape), and the outlet opening diameter (dout) larger than the inlet opening diameter (din) of the first gas discharge passage 51 is formed relative to the inlet opening diameter (din). In addition, an axial center (C2) of the second gas discharge passage 52 is eccentrically formed with respect to an axial center (C1) of the first gas discharge passage 51 by a predetermined distance (Δd).

Even in such a configuration, when the pressure of the gas in the battery container reaches a predetermined value for any reason, the gas discharge valve 54 bursts out against the press-fitting force due to the pressure of the gas and withdraws from the battery lid 6. When the gas discharge valve 54 withdraws, the streamline of the gas that has flowed out of the first gas discharge passage 51 flows to the second gas discharge passage 52 having a large outlet opening diameter, and it thus becomes possible for the streamline of the gas to smoothly flow out without being disturbed, unlike in conventional configurations, and it becomes possible to avoid the amount of the gas discharged from being suppressed. As a result, it becomes possible to reduce the weight of the battery lid 6 and secure a sufficient amount of the gas discharged.

As described above, in the present embodiment, the gas discharge mechanism that is provided in the battery lid 6 includes the first gas discharge passage 51 connected to the inner portion side (SPin) of the battery container, the second gas discharge passage 52 that is connected to the first gas discharge passage 51 with an axial center eccentric to the axial center of the first gas discharge passage 51 and connected to the outer portion side (SPout) of the battery container, and the gas discharge valve 54 that is provided in the first gas discharge passage 51 and performs an opening action so that the first gas discharge passage 51 and the second gas discharge passage are connected to each other when the gas pressure in the battery container reaches a predetermined value, and furthermore, the cross-sectional shape of the second gas discharge passage 52 seen in the outflow direction of the gas when the gas discharge valve 54 has been opened is formed in a step-like large diameter portion that does not hinder the flow of the streamline of the gas that flows out of the first gas discharge passage 51.

According to the present embodiment, since the streamline of the outflowing gas is not hindered by the second gas discharge passage 52, the gas is capable of smoothly flowing, and the gas discharge capability can be enhanced.

In the first embodiment to the fifth embodiment, examples where the gas discharge valve 54 is provided in the first gas discharge passage 51 have been shown. Among these, an example where the gas discharge valve 54 is provided at the second gas passage side 52 end of the first gas discharge passage 51 is shown in the drawing. Additionally, the gas discharge valve 52 may be provided on the second gas discharge passage 52 side of the inlet opening portion 51in in the first gas discharge passage 51 and on the inlet opening portion 51in side of the second gas discharge passage 52.

In addition, in the first embodiment to the fifth embodiment, examples where the area (or opening diameter) of at least a main portion of the first gas discharge passage 51 or the area (or opening diameter) of the opening portion of the inlet opening portion 51in has substantially the same area (or opening diameter) as the gas discharge valve 54 have been shown. Additionally, in the first gas discharge passage 51, the area (or opening diameter) at the gas discharge valve 54 may be smaller than the inlet opening portion 51in in the first gas discharge passage 51. This makes it easy to operate processing equipment upon insertion, discharge, or the like in some cases. In this case, a value (52out/54) obtained by dividing the area (or opening diameter) of the outlet opening portion 52out by the area (or opening diameter) of the gas discharge valve 52 is preferably larger than a value (51in/54) obtained by dividing the area (or opening diameter) of the inlet opening portion 51in by the area (or opening diameter) of the gas discharge valve 54 from the viewpoint of discharging the gas.

As one example, the first gas discharge passage 51 and the second gas passage are not formed to be linear, but can be formed in a shape having a linear inclined surface that expands outward as in the cross section shown in Fig. 4C described earlier. As another form, the cross sections of the first gas discharge passage 51 and the second gas discharge passage 52 each may be an arc inclined surface.

### Example 6

Next, a sixth embodiment of the present invention will be described. In the first embodiment to the fifth embodiment, the gas discharge valve 54 is provided in the first gas discharge passage 51, but the present embodiment is different therefrom in terms of the fact that the gas discharge valve 54 is provided in the second gas discharge passage 52.

As shown in Fig. 16, based on the configuration in the first embodiment, a gas discharge valve 60 is provided on the second gas discharge passage 52 side when seen from the connection portion between the first gas discharge passage 51 and the second gas discharge passage 52. The gas discharge valve 60 operates so as to withdraw from the second gas discharge passage 52 when the gas pressure in the battery container exceeds a predetermined value as described in the first embodiment.

Here, the gas discharge valve 60 is fixed to the wall surface of the second gas discharge passage 52, here, the inclined portion 53, by a method such as welding. When a method, such as welding, is used as described above, it is possible to fix the gas discharge valve 60 to any place in the inclined portion 53.

In addition, as shown in the drawing, when the gas discharge valve 60 is formed on the second gas discharge passage 52 side including the boundary part where the first gas discharge passage 51 and the second gas discharge passage 52 are connected to each other, it is possible to form the gas discharge valve 60 by machining. Here, the gas discharge valve 60 can be formed as a film portion integrally formed with the battery lid 6 as described in the first embodiment.

The film-like gas discharge valve 60 can be formed by, for example, forming the first gas discharge passage 51, which is a columnar space, toward the boundary part by cutting and forming the second gas discharge passage 52 formed of the inclined portion 53 by, similarly, cutting toward the boundary part.

Alternatively, the gas discharge valve 60 can be formed by pressing (drawing with a punch and a die). In this case, the film-like gas discharge valve 60 is formed by forming the second gas discharge passage 52 with a punch and forming the first gas discharge passage 51 with a die. It is needless to say that, as the pressure receiving surface of the film portion as the gas discharge valve 60, an annular thin-walled part in which a side that is continuous from the wall surface of the second gas discharge passage 52 is thinner than the vicinity of the central portion is formed rather than a part having a uniform thickness, whereby, when a gas pressure has been applied thereto, the film portion as the gas discharge valve 60 is split in a circular shape from this annular groove, and the pressure receiving surface is cleanly peeled off.

Since the gas discharge valve 60 is formed in the boundary part, the inclined portion 53 functions as a draft angle for the punch, and drawing becomes possible. When an annular groove that is formed by drawing is provided in a part of the gas discharge valve 60 that is continuous from the inclined portion 53, it is possible to withdraw the gas discharge valve 60 as described earlier.

In addition, in the present embodiment, the gas discharge valve 60 can be formed such that the area (or opening diameter) of the second gas discharge passage 52 side becomes larger than the area (or opening diameter) of the first gas discharge passage 51 side.

In the present embodiment as well, since the streamline of the outflowing gas is not hindered by the second gas discharge passage, the gas is capable of smoothly flowing, and the gas discharge capability can be enhanced. Fig. 16 is based on the configuration of the first embodiment, but the same gas discharge valve can also be provided in the configurations of the second embodiment to the fifth embodiment.

In addition, in the first embodiment to the sixth embodiment described above, the cross-sectional shape orthogonal to the axial line of the gas discharge passage was circular, but is not limited thereto, and may be a rectangular, oval, or elliptical shape as long as the streamline is smoothly formed.

As described in the above embodiments, in the battery in the present invention, the gas discharge mechanism includes the first gas discharge passage connected to the inner portion side of the battery container, the second gas discharge passage connected to the first gas discharge passage and connected to the outer portion side of the battery container, and the gas discharge valve that is provided in a part of the gas discharge passage composed of the first gas discharge passage and the second gas discharge passage and performs an opening action so that the inner portion side and the outer portion side of the battery container are connected to each other in the gas discharge passage when the gas pressure in the battery container reaches a predetermined value, and furthermore, the cross-sectional shape of the second gas discharge passage seen in the outflow direction of the gas when the gas discharge valve has been opened is formed in a shape that does not hinder the flow of the streamline of the gas that flows out of the first gas discharge passage.

According to this, since the streamline of the outflowing gas is not hindered by the second gas discharge passage, the gas is capable of smoothly flowing, and the gas discharge capability can be enhanced.

In the above embodiments, the length of the first gas discharge passage 51 in the plate thickness (t) direction can be formed to be 5% or more and 80% or less of the plate thickness (t) of the battery lid from the viewpoint of the manufacturability. The length is preferably 10% or more and 50% or less from the viewpoint of the flow of the gas.

In addition, the present embodiment is preferably a battery in which the gas discharge valve 54 is provided in a part of the gas flow path having the first gas discharge passage 51 and the second gas discharge passage 52, the second gas discharge passage has a large opening diameter compared with the opening diameter of the first gas discharge passage 51, and any of the following A to C is satisfied.

A: The second gas discharge passage 52 has the inclined portion 53 that is linearly inclined, in which the opening diameter of the second gas discharge passage 52 is formed to continuously and gradually increase toward the outer portion side of the battery container, and the cross-sectional shape seen in the outflow direction of the gas expands in the direction away from the axial line of the second gas discharge passage 52.

B: The second gas discharge passage 52 is an arc-like portion formed in an arc shape, in which the opening diameter of the second gas discharge passage 52 is formed to continuously and gradually increase toward the outer portion side of the battery container, and the cross-sectional shape seen in the outflow direction of the gas expands in the direction away from the axial line of the second gas discharge passage 52 (for example, the arc-like portion is a convex arc portion that protrudes toward the axial line side of the second gas discharge passage 52 or the arc-like portion is a concave arc portion that recedes from the axial line side of the second gas discharge passage 52).

C: The second gas discharge passage 52 is formed in a step shape in which the outer side of the battery container has a large opening diameter.

Next, a configuration of the battery capable of efficiently leading the gas generated in the battery container to the first gas discharge passage 51 will be simply described. In this case, the gas discharge mechanism 10 in the battery container is positioned above the battery can 1 in the gravity direction.

In Fig. 17, the battery can 1 is accommodated in the electrode body 3 or the like surrounded by a separator 61. The battery can 1 is formed of a rectangular metal can and includes an opening 1a opened along the longitudinal direction and an accommodation portion 1b that is continuous from the opening 1a. This battery can 1 is formed of, for example, aluminum or an aluminum alloy.

An upper end portion 3a of the electrode body 3 is formed on a side opposite to the bottom portion 22 of the battery can 1. Terminal tabs 62A and 62B are disposed in this upper end portion 3a. The terminal tab 62A is electrically connected to the positive electrode external terminal 8A, and the terminal tab 62B is electrically connected to the negative electrode external terminal 8B. In addition, the electrode body 3 is laminated along the vertical direction (gravity direction), a tiny gap is formed between adjacent surfaces, and this gap is connected to the upper end portion 3a.

The battery lid 6 seals the opening 1a of the battery can 1. The battery lid 6 is formed of a long plate-like metal plate, and a positive electrode side insertion hole formed of a circular through hole is formed on one end side in the longitudinal direction. An insertion portion of the positive electrode external terminal 8A is inserted into the positive electrode side insertion hole. Similarly, a negative electrode side insertion hole formed of a circular through hole is formed on the other end side in the longitudinal direction in the battery lid 6. An insertion portion of the negative electrode external terminal 8B is inserted into the negative electrode side insertion hole.

In addition, in the battery lid 6, an insertion hole for liquid injection formed of a circular through hole is formed between the positive electrode external terminal 8A and the negative electrode external terminal 8B. A sealing plug 11 is inserted into the insertion hole for liquid injection.

Furthermore, the battery lid 6 has the gas discharge mechanism 10 formed in the center in the longitudinal direction, and the battery lid 6 is welded to the battery can 1. The battery lid 6 is formed of, for example, aluminum or an aluminum alloy. The gas discharge mechanism 10 includes the configurations of several embodiments described above.

An insulation cover 63 coats the electrode body 3 and coats parts of the electrode body 3 other than the upper end portion 3a with the upper end portion 3a of the electrode body 3 exposed outward. The insulation cover 63 is formed in, for example, a pentahedral shape and is configured by being folded in a box shape. The insulation cover 63 is formed of, for example, a polypropylene.

In the battery having the present structure, since the electrode body 3 is laminated along the vertical direction (gravity direction), a tiny gap is formed between adjacent surfaces, and this gap is connected to the upper end portion 3a, a gas that is generated from the electrode body 3 is smoothly led upward in the gravity direction to a space between the electrode body 3 and the battery lid 6, and it is thus possible to enhance the gas discharge capability with a small size.

The present invention is not limited to several embodiments described above and includes a variety of modification examples. The above-described embodiments are detailed descriptions for making the present invention easily understood, the present invention is not necessarily limited to articles including all of the described configurations. In addition, a part of the configuration of a certain embodiment can be substituted into the configuration of another embodiment, and the configuration of a certain embodiment can also be added to the configuration of another embodiment. It is also possible to add, delete, and substitute a different configuration regarding the configuration of each embodiment.

### Reference Signs List

- C1: Lithium-ion secondary battery
- 1: Battery can
- 1a: Opening portion
- 2: Insulation protective film
- 3: Wound electrode body
- 3a: Upper end portion
- 4A: Positive electrode current collector plate
- 4B: Negative electrode current collector plate
- 5: Gasket
- 6: Battery lid
- 6A: Positive electrode side through hole
- 6B: Negative electrode side through hole
- 7: Insulation plate
- 8A: Positive electrode external terminal
- 8B: Negative electrode external terminal
- 9: Liquid injection port
- 10: Gas discharge mechanism
- 11: Liquid injection tap
- 12A: Positive electrode connection portion
- 12B: Negative electrode connection portion
- 50: Gas discharge passage
- 51: First gas discharge passage
- 52: Second gas discharge passage
- 53: Inclined portion
- 54: Gas discharge valve
- 55: Pressure receiving surface
- 56: Press-fit surface
- 57: Convex arc portion
- 58: Concave arc portion
- 59: Large diameter portion

## Claims

1. A battery comprising:
an energy storage element;
a battery container that accommodates the energy storage element; and
a gas discharge mechanism that fluidly connects an inner portion side of the battery container and an outer portion side of the battery container and discharges a gas in an inner portion of the battery container when a gas pressure in the inner portion of the battery container reaches a predetermined value,
wherein the gas discharge mechanism includes
a first gas discharge passage connected to the inner portion side of the battery container,
a second gas discharge passage connected to the first gas discharge passage and connected to the outer portion side of the battery container, and
a gas discharge valve that is provided in a part of a gas discharge passage on a second gas discharge passage side of an end of the first gas discharge passage inside the battery container or on a first gas discharge passage side of an end of the second gas discharge passage outside the battery container, performs an opening action so that the inner portion side and the outer portion side of the battery container are connected to each other in the gas discharge passage when the gas pressure in the inner portion of the battery container reaches the predetermined value, and is opened in a shape conforming to a passage cross-sectional shape of the gas discharge passage in the case of performing the opening action, and
furthermore, a cross-sectional shape of the second gas discharge passage seen in an outflow direction of the gas when the gas discharge valve has been opened is formed in a shape that does not hinder the flow of a streamline of the gas that flows out of the first gas discharge passage.

2. The battery according to claim 1,
wherein the gas discharge valve is provided in a side of the first gas discharge passage.

3. The battery according to claim 2,
wherein the gas discharge valve is provided in a side of the first gas discharge passage including a boundary of a connection portion between the first gas discharge passage and the second gas discharge passage.

4. The battery according to claim 1,
wherein the gas discharge valve is provided in a side of the second gas discharge passage.

5. The battery according to claim 4,
wherein the gas discharge valve is provided in a side of the second gas discharge passage including a boundary of a connection portion between the first gas discharge passage and the second gas discharge passage.

6. The battery according to claim 3 or 5,
wherein the battery container has a battery can that has an opening portion and accommodates the energy storage element and a battery lid that airtightly seals the battery can,
the battery lid has a positive electrode external terminal, a negative electrode external terminal, and the gas discharge passages that supply power to an outside from the energy storage element,
the gas discharge valve is a film portion integrally formed with the battery lid, and furthermore, a thin-walled annular groove is formed in a part that is continuous from a wall surface of the gas discharge passage in the film portion.

7. The battery according to claim 2 or 4,
wherein the cross-sectional shape of the second gas discharge passage has
an inclined portion that is linearly inclined, in which an opening diameter of the second gas discharge passage is formed to continuously and gradually increase toward the outer portion side of the battery container, and a cross-sectional shape seen in an outflow direction of the gas expands in a direction away from an axial line of the second gas discharge passage.

8. The battery according to claim 2 or 4,
wherein the cross-sectional shape of the second gas discharge passage is
an arc-like portion formed in an arc shape, in which an opening diameter of the second gas discharge passage is formed to continuously and gradually increase toward the outer portion side of the battery container, and a cross-sectional shape seen in an outflow direction of the gas expands in a direction away from an axial line of the second gas discharge passage.

9. The battery according to claim 8,
wherein the arc-like portion is a convex arc portion that protrudes toward an axial line side of the second gas discharge passage.

10. The battery according to claim 8,
wherein the arc-like portion is a concave arc portion that recedes from an axial line side of the second gas discharge passage.

11. The battery according to claim 2 or 4,
wherein the first gas discharge passage and the second gas discharge passage are columnar spaces,
the second gas discharge passage has a large opening diameter compared with an opening diameter of the first gas discharge passage, and the second gas discharge passage is formed in a step shape by the large opening diameter.

12. The battery according to claim 11,
wherein axial centers of the first gas discharge passage and the second gas discharge passage are the same axial center.

13. The battery according to claim 11,
wherein axial centers of the first gas discharge passage and the second gas discharge passage are eccentric axial centers.

14. The battery according to claim 11,
wherein the gas discharge mechanism includes
a gas discharge valve that is provided in a part of a gas discharge passage composed of the first gas discharge passage and the second gas discharge passage, performs an opening action so that the inner portion side and the outer portion side of the battery container are connected to each other in the gas discharge passage when the gas pressure in the battery container reaches the predetermined value, and is opened in a shape conforming to a passage cross-sectional shape of the gas discharge passage in the case of performing the opening action.

15. The battery according to claim 2 or 4,
wherein the gas discharge valve is a valve that is withdrawn from the first gas discharge passage when being opened.
